# EUROPÄISCHE PATENTSCHRIFT

(11) **EP 2 608 981 B1**
(45) Veröffentlichungstag und Bekanntmachung des Hinweises auf die Patenterteilung: **28.02.2018**
(21) Anmeldenummer: 11749755.2
(22) Anmeldetag: 20.07.2011
(51) Int. Cl.: B60L 11/18, G04G 7/00, G04G 5/04

(54) **SICHERUNG UND SYNCHRONISATION DER SYSTEMZEIT EINER LADESTATION**
SECURING AND SYNCHRONIZING THE SYSTEM TIME OF A CHARGING STATION
GARANTIE ET SYNCHRONISATION DE L'HEURE SYSTÈME D'UNE STATION DE CHARGE

(30) Priorität: 27.08.2010 DE 102010035685
(43) Veröffentlichungstag der Anmeldung: 03.07.2013
(73) Patentinhaber: innogy SE, 45128 Essen (DE)
(72) Erfinder: GAUL, Armin, 59379 Selm (DE)
(74) Vertreter: Cohausz & Florack
(86) Internationale Anmeldenummer: PCT/EP2011/062409
(87) Internationale Veröffentlichungsnummer: WO 2012/025311

(56) Entgegenhaltungen:
- WO-A2-2010/042550
- US-A1- 2009 177 580
- US-A1- 2010 006 356

## Beschreibung

Der Gegenstand betrifft ein Verfahren zur Synchronisation einer in einer Ladestation bereitgestellten Zeitinformation mit einer Systemzeit. Darüber hinaus betrifft der Gegenstand eine Ladestation als auch eine Prüfstelle, sowie ein System mit einer Ladestation und einer Prüfstelle. Insbesondere bezieht sich der Gegenstand auf Vorrichtungen und Verfahren im Bereich der Elektromobilität, insbesondere der Ladestationen für Elektrofahrzeuge und der Abrechnung der durch die Elektrofahrzeuge bezogenen elektrischen Energie.

Die Verbreitung elektrisch betriebener Fahrzeuge wird vermutlich in naher Zukunft rapide zunehmen. Mit der Verbreitung von Elektrofahrzeugen, die mit einem Elektromotor betrieben werden, sollte jedoch sichergestellt werden, dass diese in einfachster Weise mit Energie versorgt werden können. Hierzu sollte eine funktionierende Infrastruktur zur Verfügung gestellt werden.

Insbesondere sollte die Möglichkeit gegeben werden, in öffentlichen Bereichen Energie für Elektrofahrzeuge zu beziehen. Bei den bisher verfügbaren Reichweiten von Elektrofahrzeugen zwischen 50 und einigen 100 km ist es angebracht, dass auch außerhalb des häuslichen Umfeldes ein Laden der Fahrzeuge möglich ist. Hierfür sollten in öffentlichen Bereichen Ladestationen zur Verfügung gestellt werden, um eine stete Verfügbarkeit von Energie für Elektrofahrzeuge durch ein Versorgungsnetz zur Verfügung zu stellen. Diese Verfügbarkeit von elektrischer Energie bzw. von Ladestationen ist ein entscheidendes Kriterium für die Akzeptanz von Elektrofahrzeugen.

Bei in öffentlichen Bereichen installierten Ladestationen muss jedoch sichergestellt werden, dass der Kunde die bezogene Energie bezahlt. Auch sollte sichergestellt werden, dass der Kunde vor dem Beziehen elektrischer Energie Kenntnis über die zu erwartenden Kosten hat. Entsprechend des herkömmlichen Tankvorgangs sollte der Kunde unmittelbar vor dem Aufladen der Batterie wissen, welche Kosten ihn erwarten. So sollte dem Kunden beispielsweise der Preis für eine Kilowattstunde bekannt sein. Darüber hinaus sollte sichergestellt sein, dass der Kunde auch tatsächlich nur die Energiemenge in Rechnung gestellt bekommt, die er auch bezogen hat.

Es ist der politische Wille, verschiedene Tarife für bezogene elektrische Energie zu verschiedenen Uhrzeiten zur Verfügung zu stellen. Insbesondere soll in Zukunft eine Vielzahl von verschiedenen Zeittarifen angeboten werden, so dass es mehrere Tarifumschaltzeiten pro Tag gibt. Tarifumschaltzeiten gehen stets einher mit veränderten Einheitensätzen, d.h. veränderten Kosten pro bezogene Energiemenge, insbesondere pro bezogener Kilowattstunde elektrischer Energien.

Bei aktuellen Installationen, bei denen in der Regel nur eine Tarifumschaltung pro Tag, beispielsweise bei Geschäfts- und Firmenkunden sowie bei Speicherheizungskunden stattfand, war es für den Kunden möglich, die Uhrzeit am geeichten Zähler für die Elektrizität (Energiezähler, Stromzähler) abzulesen und zu überprüfen, ob die Zeit mit einer von ihm wahrgenommenen Zeit übereinstimmt. So wurde seitens der Eichbehörden unterstellt, dass der Kunde stets überprüfen konnte, ob die seinem Zähler zugeordnete Uhr die für die Tarifermittlung korrekte Uhrzeit anzeigt.

Finden jedoch mehr als ein bis zwei Tarifumschaltungen pro Tag statt, kann der Kunde nicht mehr selbsttätig feststellen, ob die Zeitpunkte der Tarifumschaltungen korrekt sind. Insbesondere bei echter Zeitvariabilität, bei der eine Mehrzahl von Tarifumschaltungen pro Tag stattfinden, ist dies durch den betroffenen Kunden kaum mehr zu leisten.

Dieses Problem verschärft sich darüber hinaus noch bei Energiezählern, deren zugeordnete Uhr dem Kunden nicht frei zugänglich ist. So ist beispielsweise bei Ladestationen für Elektrofahrzeuge geplant, diese ohne Sichtanzeige zu versehen, wodurch der Kunde die Zeit des Zählers nicht mehr ablesen kann. Weicht nun die Zeitbasis innerhalb der Ladestation von der tatsächlichen Zeit ab, so kann es dazu kommen, dass die bezogene Energiemenge zu einem falschen Tarif abgerechnet wird. Der Kunde könnte diese Abweichung gegebenenfalls dadurch feststellen, dass sein Rechnungsbeleg (Tankbeleg) eine andere Ladezeit ausweist, als er sich notiert hat. Für den Messstellenbetreiber an der Ladestation besteht jedoch keinerlei Möglichkeit, zu überprüfen, ob die Uhrzeit korrekt ist.

Dem Gegenstand lag somit die Aufgabe zugrunde, die in einer Ladestation bereitgestellte Zeitinformation gegenüber Manipulationen und Verfälschungen gesichert zu synchronisieren.

Diese Aufgabe wird gemäß einem ersten Aspekt durch ein Verfahren nach Anspruch 1 gelöst. Ferner wird diese Aufgabe durch eine Ladestation nach Anspruch 11, eine Prüfeinrichtung nach Anspruch 12 sowie ein System nach Anspruch 13 gelöst.

Beim Ladevorgang bezieht das Elektrofahrzeug elektrische Energie von der Ladestation. In der Ladestation wird diese elektrische Energie mit Hilfe eines Messgerätes (Zählers) gemessen. Während des Ladevorgangs als auch beim Abschluss des Ladevorgangs ist es notwendig, dass die bezogene Energiemenge (z.B. der Messgerätezählerstand) für Abrechungszwecke erfasst wird und der Benutzer des Fahrzeugs Kenntnisse über die bezogene Energiemenge erhält.

Neben dem Erfassen der bezogenen Energiemenge und der Information des Kunden über die bezogene Energiemenge ist es notwendig, den Tarif bestimmen zu können, zu dem die Energie bezogen wurde. Insbesondere bei Zeitvariabilität kann es vorkommen, dass bei einem längeren Ladevorgang, der beispielsweise länger als eine, beispielsweise sechs Stunden dauert, mehrere Tarifwechsel stattfinden. Um diese Tarifwechsel exakt abbilden zu können, ist es notwendig, dass die in der Ladestation bereitgestellte Zeitinformation korrekt ist.

Zeitinformation im Sinne des Gegenstandes kann ein Datensatz sein, der Uhrzeit oder Datum enthält. Die Zeitinformation kann auch eine fortlaufende Nummer (Zeitindex) sein, die mit einer Auflösung von zumindest einer Sekunde, vorzugsweise 0,1 Sekunden in eine Uhrzeit umrechenbar ist. Die Zeitinformation sollte eichrechtlich sicher sein, so dass eine tarifabhängige Abrechnung fehlerfrei und eichrechtlich nicht zu beanstanden ist. Daher ist darauf zu achten, dass die in dem Zähler (der Ladestation) bereitgestellt Zeitinformation synchron mit einer Systemzeit ist. Die Systemzeit ist in der Regel die Zeit, die der Abrechnung beim Energieversorger zugrunde gelegt wird.

Druckschrift US2009177580 wird als nächstliegender Stand der Technik angesehen und offenbart die Merkmale der Präambel des unabhängigen Anspruchs 1. Gegenständlich wird vorgeschlagen, dass in der Ladestation die Zeitinformation erfasst wird. Das kann bedeutet, dass die Zeitinformation von einem Zeitgeber innerhalb der Ladestation ausgelesen und zur Verfügung gestellt wird. Auch kann das bedeuten, dass die Ladestation aus einem Ladestationssteuergerät und einem Energiezähler gebildet ist und in dem Energiezähler neben Information zu einer bezogenen Energie auch Zeitinformationen bereitgestellt werden. In diesem Fall kann von dem Ladestationssteuergerät über eine entsprechende Schnittstelle die Zeitinformation von dem Energiezähler erfasst, ausgelesen werden.

Die erfasste Zeitinformation wird innerhalb der Ladestation derart aufbereitet, dass sie an eine zentrale Prüfstelle übermittelt werden kann. Diese Übermittlung kann beispielsweise über Funk, beispielsweise über ein Mobilfunknetz erfolgen. Auch ist es möglich, dass die Übermittlung der Zeitinformation mittels Power-Line Communication über das Energiekabel erfolgen kann, mit welchem die Ladestation an eine Trafostation und das daran angeschlossene Energieversorgungsnetz angeschlossen ist. Andere Übertragungsverfahren sind ebenfalls möglich.

In dem Energiezähler oder der Ladestation kann eine Überwachungsschaltung eingerichtet sein, mit deren Hilfe jede Veränderung an der Zeit ermittelt werden kann. In einem solchen Fall kann ein hierzu vorgesehener Fehlerindex verändert, vorzugsweise inkrementiert werden. Das kann bedeuten, dass jedes Stellen der Uhrzeit eine Veränderung des Fehlerindexes bewirkt. Die Überwachungsschaltung kann so eingerichtet sein, dass eine Toleranzschwelle eine Unterscheidung zwischen einer Veränderung der Uhrzeit und einer Synchronisation ermöglicht. Eine solche Toleranzschwelle kann z.B. bei unter 30 Sekunden, bevorzugt unter 27 oder auch unter 23 Sekunden oder auch unter 10 Sekunden liegen. Nur bei einer Veränderung der Zeit oberhalb der Toleranzschwelle kann eine Veränderung des Fehlerindexes notwendig sein.

Bei dem gegenständlichen Verfahren wird vorgeschlagen, die nach Schritt a) erfassten aktuellen Zeitinformation und den Wert des Fehlerindexes nach Schritt b) zu Übermitteln.

Das Übermitteln kann gesichert erfolgen. Insbesondere wird vorgeschlagen, dass der Austausch der Zeitinformation zwischen der Ladestation und der Prüfstelle über das NTP Protokoll erfolgt. Hierbei kann auch das Autokey Verfahren zum Einsatz kommen. Mittels des Autokey Verfahrens wird sichergestellt, dass die übertragenen Informationen vor Manipulation gesichert sind. Hierbei ist es möglich, dass die übermittelten Informationen signiert übertragen werden. Hierbei ist es möglich, dass beispielsweise der die Zeitinformation enthaltene Datensatz (Datenpaket) mit einem privaten Schlüssel der Ladestation (und/oder des Zählers) signiert und/oder verschlüsselt wird. In dem Datensatz kann neben der Zeitinformation und dem Fehlerindex auch die Ladestationsnummer, ein Statuswort, ein Zählerstand, ein Zählerstatus oder dergleichen enthalten sein.

Nachdem der Fehlerindex und die aktuelle Zeitinformation an die Prüfstelle übermittelt worden sind, wird gegenständlich vorgeschlagen, dass eine neue Zeitinformation durch die Ladestation bei der Prüfstelle gemäß Schritt c) abgefragt wird. Hierbei kann eine gesicherte Kommunikation, insbesondere nach dem NTP v.4 Protokoll erfolgen. Der Schritt c) kann nach dem Autokey Verfahren gesichert werden. Im Schritt c) wird eine Systemzeit von der Prüfstelle an die Ladestation übermittelt. Diese Systemzeit soll dazu verwendet werden, die Ladestation mit der Prüfstelle zu synchronisieren.

Die Prüfstelle übermittelt in Schritt c) an die Ladestation eine neue Zeitinformation. Dabei kann eine Übertragungslatenz bereits berücksichtigt sein. So können Signallaufzeiten zwischen Prüfstelle und Ladestation im Rahmen der Kommunikation zwischen Prüfstelle und Ladestation ausgemessen werden und die neue Zeitinformation kann um die gemessene Latenz bereits bereinigt sein. Das Übertragen der neuen Zeitinformation von der Prüfstelle an die Ladestation kann ohne ein Signieren und/oder Verschlüsseln erfolgen. Dies ist insbesondere dann notwendig, wenn die übertragene Zeitinformation möglichst zeitnah in der Ladestation verfügbar sein soll. Das Überprüfen einer Signatur bzw. das Entschlüsseln der neuen Zeitinformation in der Ladestation kann einen Zeitversatz bewirken, der unerwünscht ist. Da die Dauer für ein Überprüfen einer Signatur und/oder ein Entschlüsseln variabel ist, kann der Zeitversatz nicht im vorhinein berücksichtigt werden, was dazu führt, dass die neue Zeit nach dem Überprüfen der Signatur und/oder dem Entschlüsseln in der Ladestation nicht mehr mit der Systemzeit übereinstimmt und eine Abweichung von 10 Sekunden bis 3 Minuten aufweisen kann.

Anschließend kann ein Vergleichen der abgefragten neuen Zeitinformation mit der in der Ladestation bereitgestellten aktuellen Zeitinformation in der Ladestation erfolgen. Da die Latenz bei der neuen Zeitinformation bereits berichtigt ist, ist die neue Zeit mit einer in der Ladestation oder dem Energiezähler aktuell erfassten Zeit nahezu synchron, solange die aktuelle Zeit seit der letzten Synchronisation nicht verändert wurde oder die Uhr falsch geht. Synchron im Sinne dieses Vergleichens kann eine Abweichung von weniger als eine Minute bedeuten, vorzugsweise weniger als 27 Sekunden.

Wenn die aktuelle Zeit nicht mit der neuen Zeit synchron ist, so kann darauf geschlossen werden, dass die Zeit in dem Zähler manipuliert worden ist oder die Uhr in dem Zähler nicht korrekt die Zeit erfasst, z.B. fehlerhaft geht.

Stimmt die aktuelle Zeitinformation nicht mit der neuen Zeitinformation überein, so muss die aktuelle Zeitinformation im Zähler nachgestellt werden. Es ist möglich, zwischen einem Nachstellen und einem Synchronisieren der aktuellen Zeitinformation mit der neuen Zeitinformation derart zu unterscheiden, dass ein Synchronisieren eine Veränderung der aktuellen Zeitinformation von weniger als 30 Sekunden, bevorzugt weniger als 27 oder 20 Sekunden beinhaltet wohingegen ein Nachstellen eine größere Veränderung der aktuellen Zeitinformation beinhaltet.

Es wird auch vorgeschlagen, dass gemäß Schritt e) ein Fehlerindex bei einer festgestellten Abweichung der abgefragten neuen Zeitinformation von der in der Ladestation bereitgestellten aktuellen Zeitinformation die größer als ein Grenzwert ist in der Ladestation verändert wird. Wie erläutert, erlaubt der Grenzwert eine Unterscheidung zwischen einer Synchronisation und einem Nachstellen. Wie bereit zuvor erläutert, wird der Fehlerindex auch bei anderen Ereignissen verändert. Ein Nachstellen oder eine sonstige Veränderung der aktuellen Zeit bewirkt somit eine Veränderung des Fehlerindexes.

Die aktuelle Zeit wird auf die neue Zeit eingestellt, wie nach Schritt f) vorgeschlagen wird. Hierbei kann entweder eine Synchronisation oder ein Nachstellen erfolgen.

Anschließend kann die nach Schritt f) eingestellte aktuelle Zeitinformation zusammen mit dem Wert des Fehlerindexes an die Prüfstelle übermittelt werden. Auch hier kann das NTP Protokoll, insbesondere die Verwendung des Autokey Verfahrens zum Einsatz kommen. Vor Schritt g) ist es möglich, dass zunächst die aktuelle Zeitinformation signiert wird.

Die Ladestation kann in Schritt g) an die Prüfstelle die jüngste gespeicherte, signierte Zeitinformation, die aktuelle Zeitinformation sowie den Wert des Fehlerindexes an die Prüfstelle übermitteln. Dies kann zusammen mit einer Aufforderung ("End Session Signal") an die Prüfstelle erfolgen, einen Kommunikationskanal zu schließen.

Abschließend kann der in den Schritten b) und g) übermittelte Wert der Fehlerindexe in der Prüfstelle verglichen werden. Der Vergleich des in Schritt b) übermittelten Fehlerindexes mit einem zuvor bei einem Zeitabgleich in einem Schritt g) übermittelten Fehlerindexes kann eine Manipulation der Zeit in dem Zähler erkennbar machen. Wenn die Zeitinformation nicht manipuliert wurde, so müsste der Fehlerindex unverändert geblieben sein. Somit kann prüfstellenseitig auch festgestellt werden, in welchem Intervall eine Veränderung der Zeitinformation in der Ladestation stattgefunden hat.

Stimmen die Fehlerindexe überein, so wurde die aktuelle Zeitinformation mit der neuen Zeitinformation, wie oben beschrieben, synchronisiert. Anderenfalls wurde die aktuelle Zeitinformation mit der neuen Zeitinformation nachgestellt, und es kann darauf geschlossen werden, dass die aktuelle Zeitinformation in dem Zeitraum seit der letzten Synchronisation verfälscht war. Dann kann ermittelt werden, wir groß der tatsächliche Zeitunterschied war. Da gegenständlich in Schritt b) die alte aktuelle Zeitinformation und in Schritt g) die neue aktuelle Zeitinformation übermittelt wurde, kann ein Vergleich dieser Zeitinformationen einen Aufschluss darüber geben, wie groß der Zeitfehler war.

Auch wird vorgeschlagen, dass die Ladestation die aktuelle Zeitinformation, insbesondere vor den Schritten b) und/oder f) und/oder in regelmäßigen, vorzugsweise gleichmäßigen Abständen, signiert abspeichert. Das signierte Abspeichert erlaubt es, im nachhinein die Zeitinformationen in der Ladestation zu überprüfen. Durch das Signieren ist eine nachträgliche Manipulation dieser Daten schwierig.

Auch wird vorgeschlagen, dass in Schritt a) zusätzlich eine Ladestationskennung erfasst wird und dass in Schritt b) zusätzlich die Ladestationskennung und/oder die jüngste signiert gespeicherte Zeitinformation übermittelt wird und/oder dass in Schritt f) zusätzlich die Ladestationskennung und/oder die jüngste signiert gespeicherte Zeitinformation übermittelt wird.

Mit Hilfe der Ladestationskennung ist es möglich, in der Prüfstelle die Ladestation zu identifizieren. Zusammen mit der Ladestationskennung kann der Prüfstelle ein sogenanntes NTP "Start Session" Signal mitgeteilt werden. Dies ist ein Signal nach dem NTP Standard. Hiermit wird eine Zeitsynchronisation eingeleitet, welche über einen gesicherten Kommunikationskanal erfolgen kann. Eine solcher Kommunikationskanal kann über ein Zeitfenster von z.B. einigen Minuten, z.B. 30 Minuten, aufrecht erhalten bleiben. Über diesen Kommunikationskanal kann in Schritt c) die neue Zeitinformation übertragen werden.

Durch das Übermitteln der gespeicherten signierten Zeitinformation ist es möglich, prüfstellenseitig die Identität der Ladestation zu überprüfen, in dem die Signatur geprüft wird. Durch das Übermitteln bereits gespeicherter signierter Zeitinformationen entfällt das zeitaufwändige signieren der aktuellen Zeitinformation im Moment der Synchronisation.

Auch wird vorgeschlagen, dass die in Schritt b) und/oder in Schritt f) übermittelten Informationen in der Prüfstelle jeweils signiert und/oder mit Zeitinformationen der Prüfstelle abgespeichert werden. Die Prüfstelle kann die empfangenen Informationen mit eigenen Zeitinformationen versehen und anschließend abspeichern. Zusammen mit der Ladestationskennung kann können diese Werte abgespeichert werden. Auch können die Zeiten, zu denen der Kommunikationskanal geöffnet und geschlossen wurde, gespeichert werden. Das Abspeichern kann unter Verwendung einer Signatur der Prüfstelle erfolgen. Dies erhöht die Datensicherheit gegenüber Manipulationen. In der Prüfstelle liegen somit die übertragenen Daten manipulationssicher gespeichert vor.

Auch wird vorgeschlagen, dass nach dem Empfang der in Schritt b) übermittelten Ladestationskennung die Prüfstelle einen Kommunikationskanal für ein Abfragen nach Schritt c) durch die mittels der Ladestationskennung identifizierte Ladestation aufrecht erhält. Wie bereits zuvor erläutert, kann der Kommunikationskanal eine bestimmte Zeit aufrecht erhalten bleiben.

Innerhalb des Zeitfensters des Kommunikationskanals kann eine Synchronisation erfolgen. Die Prüfstelle kann überwachen, ob innerhalb des Zeitfensters ein Signal gemäß Schritt g) empfangen wird. Hierbei kann überprüft werden, ob die Ladestationskennung nach Schritt b) der Ladestationskennung nach Schritt g) entspricht, womit sichergestellt wird, dass auch die anfragende Ladestation die Zeitsynchronisation zu Ende führt.

Auch wird vorgeschlagen. dass in Schritt e) ein Grenzwert von größer 10 Sekunden, vorzugsweise größer 20 Sekunden, besonders bevorzugt von größer 23 bzw. 27 Sekunden vorgegeben ist. Wie bereits erläutert, kann zwischen einer Synchronisation und einem Nachstellen der aktuellen Zeitinformation unterschieden werden. Nur bei einem Nachstellen ist es notwendig, einen Alarmeintrag in einem Logbuch zu verzeichnen, dem nachgegangen werden kann.

Auch wird vorgeschlagen, dass nach dem Empfang der in Schritt g) übermittelten Ladestationskennung die Prüfstelle den Kommunikationskanal schließt. In diesem Fall wurde die Synchronisation abgeschlossen und der gesicherte Kommunikationskanal kann abgebaut werden. In diesem Fall kann auch darauf geschlossen werden, dass die Synchronisation tatsächlich durchgeführt wurde. Anderenfalls kann ein Alarmeintrag in ein Logbuch geschrieben werden.

Auch wird vorgeschlagen, dass bei einer Abweichung der Werte der Fehlerindexe in Schritt h) ein Alarmsignal generiert wird und/oder dass bei einem Ausbleiben einer Information nach Schritt g) in der Prüfstelle ein Alarmsignal generiert wird. Ein Alarmsignal kann einen Alarmeintrag in einem Logbuch bewirken.

Auch wird vorgeschlagen, dass in der Prüfstelle eine Liste mit Ladestationskennungen gespeichert ist und dass mit Hilfe der gespeicherten Ladestationskennungen nach Schritt b) übermittelte Informationen auf ihre Zulässigkeit geprüft werden. Somit ist es möglich, festzustellen, ob eine Synchronisationsanfrage von einer bereits bekannten Ladestation erfolgt und ob diese Anfrage zulässig ist. Es ist möglich, dass eine Anfrage mit einer Ladestationskennung, die noch nicht bekannt ist, zurückgewiesen wird oder unbeantwortet bleibt. Auch kann die Anfrage beantwortet werden und die Ladestationskennung in die Liste aufgenommen werden.

Auch ist es möglich, dass in der Prüfstelle eine Liste mit Ladestationskennungen gespeichert ist und dass in regelmäßigen Abständen überprüft wird, ob die zugehörigen Ladestationen Informationen nach den Schritten b) und g) übermittelt haben. Dies ermöglicht es, zu überprüfen, ob alle Ladestationen ihre Zeit synchronisieren. Wenn eine Ladestation aus der Liste innerhalb eines bestimmten Zeitfensters, z.B. 24 Stunden, keine Synchronisation vorgenommen hat, kann ebenfalls ein Alarmeintrag in einem Logbuch generiert werden.

Die Begriffe "Signatur", "signieren" etc können im Sinne einer elektronischen, datentechnischen Signatur verstanden werden. Auch kann durch das elektronische Signieren des Datenpakets sichergestellt werden, dass dieses nicht mehr nachträglich manipuliert wird.

Mit Hilfe eines eindeutigen, aus dem Datenpaket und einem dem Messgerät (Zähler) oder der Ladestation oder der Prüfstelle zugeordneten Schlüssels erstellten, vorzugsweise binären Wertes, kann eine Signatur errechnet wird. Aus dem Datenpaket kann ein Referenzwert, beispielsweise ein Hash-Code, errechnet werden. Dieser Referenzwert kann auch zur Berechnung der Signatur verwendet werden. Diese Signatur kann beispielsweise mit Hilfe des Hash-Codes und eines dem Messgerät (Zähler) oder der Ladestation oder der Prüfstelle zugeordneten Schlüssels errechnet werden. Auch kann eine Signatur unmittelbar aus dem Datenpaket und dem dem Messgerät (Zähler) oder der Ladestation oder der Prüfstelle zugeordneten Schlüssel errechnet werden.

Signieren kann ein Erstellen eines Kryptogrammes als Signatur mit Hilfe eines vorzugsweise binären Schlüssels sein, wobei mit Hilfe des Schlüssels und des zu signierenden Datenpaketes bzw. des hieraus erstellen Referenzwertes ein vorzugsweise binäres Kryptogramm erstellt wird. Mittels eines solchen Kryptogrammes ist eine Überprüfung möglich, ob das Datenpaket tatsächlich von der Ladestation erstellt wurde.

Unter einer elektronischen Signatur können auch mit elektronischen Informationen verknüpfte Daten, mit denen man den Unterzeichner bzw. Signaturersteller identifizieren und die Integrität der signierten elektronischen Informationen prüfen kann, verstanden werden. In der Regel handelt es sich bei den elektronischen Informationen um elektronische Dokumente. Die elektronische Signatur erfüllt somit technisch gesehen den gleichen Zweck wie eine eigenhändige Unterschrift auf Papierdokumenten. Eine elektronische Signatur kann unter anderem auch eine digitale Signatur umfassen. Die digitale Signatur kann die rein datentechnische, kryptographische Signatur bezeichnen, bei der kryptographische, mathematische Methoden angewandt werden. "Elektronische Signaturen" können Daten in elektronischer Form, die anderen elektronischen Daten beigefügt oder logisch mit ihnen verknüpft sind und die der Authentifizierung dienen, sein.

Eine Signatur kann mittels eines SHA-256 Verfahrens ermittelt werden. Hierbei kann beispielsweise eine Variante FIPS 180-2 verwendet werden. Insbesondere kann eine Signatur mit Hilfe eines Elliptic-Curve Kryptografieverfahrens ermittelt werden.

Hierbei ist es beispielsweise möglich, dass ein ECC-Verfahren mit 192 Bit verwendet wird.

Durch die Signatur des Datenpakets ist sichergestellt, dass die in dem Datenpaket enthaltene Informationen untrennbar miteinander verbunden sind. Wird eine der Informationen verändert, so ergäbe sich eine andere Signatur.

Vergleichen im Sinne des Gegenstandes kann dahingehend verstanden werden, dass die der aktuellen Zeitinformation zugeordnete Uhrzeit und/oder das der aktuellen Zeitinformation zugeordnete Datum mit einer Uhrzeit und einem Datum einer neuen Zeitinformation verglichen wird. Ein Vergleichen kann das Feststellen einer Abweichung beinhalten.

Gemäß einem vorteilhaften Ausführungsbeispiel wird vorgeschlagen, dass die Zeitinformation in einem Zähler, einer Zähleinrichtung oder einer mit diesen verbundenen Zusatzeinrichtung von der Ladestation bereitgestellt wird. Hierbei ist es möglich, dass die Zeitinformation durch das Gerät zur Verfügung gestellt wird, welches eichrechtlich auch für die Messung der bezogenen Energiemenge verantwortlich ist. Insbesondere sollte die Zeitinformation von einem Gerät innerhalb der Ladestation zur Verfügung gestellt werden.

Die Merkmale der Verfahren und Vorrichtungen sind frei miteinander kombinierbar. Insbesondere können Merkmale der abhängigen Ansprüche unter Umgehung der Merkmale der unabhängigen Ansprüche in Alleinstellung oder frei miteinander kombiniert eigenständig erfinderisch sein.

Die zuvor genannten Verfahren können auch als Computerprogramm oder als auf einem Speichermedium gespeichertes Computerprogramm realisiert werden. Hierbei kann fahrzeugseitig, ladestationsseitig und/oder abrechnungszentralenseitig (prüfstellenseitig) ein Mikroprozessor zur Durchführung der jeweiligen Verfahrensschritte durch ein Computerprogramm geeignet programmiert sein.

Nachfolgend wird der Gegenstand anhand einer Ausführungsbeispiele zeigenden Zeichnung näher erläutert. In der Zeichnung zeigen:
- Fig. 1: einen schematischen Aufbau eines Systems zum Laden eines Elektrofahrzeugs;
- Fig. 2: einen schematischen Aufbau einer Prüfstelle;
- Fig. 3: ein Ablaufdiagramm eines Verfahrens nach einem ersten Ausführungsbeispiel;

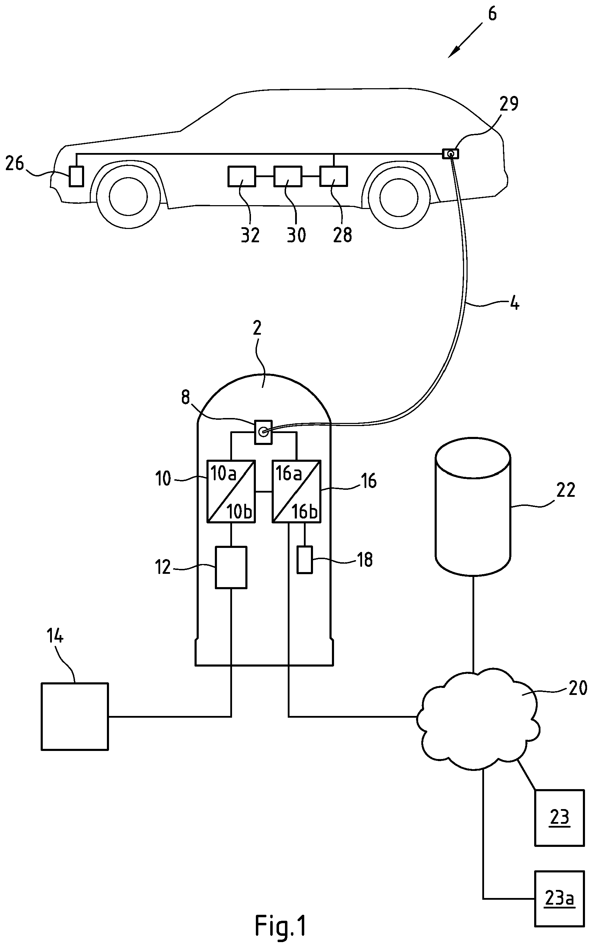

Fig. 1 zeigt eine Ladestation 2 welche über ein Verbindungskabel 4 mit einem Fahrzeug 6 elektrisch verbunden ist. In der Ladestation 2 ist eine Anschlussdose 8 zum Anschluss des Verbindungskabels 4 vorgesehen. Über das Verbindungskabel 4 werden zum Einen Energie übertragen und zum Anderen Daten zwischen Fahrzeug 6 und Ladestation 2 ausgetauscht.

Die elektrische Leistung wird über einen elektrischen Anschluss 12 von einem elektrischen Energieversorgungsnetz 14 bezogen.

In einem Zähler 10 kann ein Messgerät 10a und eine Uhr 10b angeordnet sein.

Gekoppelt an das Messgerät 10a ist eine Recheneinheit (Steuergerät) 16 mit einer Kommunikationseinheit 16a und einer Signatureinheit 16b. Die Signatureinheit 16b kann eine dem Ladegerät 2 bzw. dem Messgerät 10a zugeordnete eindeutige Identifikation, beispielsweise einen privaten Messgeräteschlüssel 18a erfassen. Auch kann ein öffentlicher Messgeräteschlüssel 18b erfasst werden. Die Signatureinheit 16b kann auch Bestandteil des Zählers 10 sein

Die Recheneinheit 16 ist über ein Datennetz 20 mit einer Abrechnungszentrale 22 verbunden.

Die Anschlussdose 8 ist elektrisch mit einem Messgerät 10a verbunden. Das Messgerät 10a misst die elektrische Leistung, die über die Anschlussdose 8 an das Fahrzeug 6 über das Verbindungskabel 4 abgegeben wird. Daneben ist eine Uhr 10b mit dem Messgerät 10a gekoppelt. Die Uhr 10b ermittelt eine lokale Zeitinformation und stellt diese bereit. Diese Zeitinformation kann in Form eines Datensatzes zur Verfügung gestellt werden.

Die Uhr 10b ist in der Lage, durch ein externes Stellsignal eingestellt zu werden. In oder an der Uhr 10b ist ein Speicher (nicht gezeigt) vorgesehen, in dem in Abständen die lokalen Zeitinformationen gespeichert werden können.

Die abgespeicherten Zeitinformationen können durch die Signatureinheit 16b signiert werden, wobei die Signatur mit Hilfe des Messgeräteschlüssels 18, bevorzugt dem privaten Messgeräteschlüssel 18a, erstellt werden kann. Die signierten Zeitinformationen sind abspeicherbar. Zusammen mit den abgespeicherten Zeitinformationen können die Zählerstände abgespeichert werden. Somit können Datensätze zumindest aus Zählerstand und Zeitinformation in dem Speicher abgespeichert werden.

Ferner ist eine Prüfstelle 23 vorgesehen, die logisch und räumlich von der Abrechnungszentrale 22 und der Ladestation 2 getrennt ist. Insbesondere kann die Prüfstelle 23 mit dem Datennetz 20, z.B. einem Weitverkehrsnetz, z.B. dem Internet, verbunden sein. Die Prüfstelle 23 kann beispielsweise in den Räumen und/oder unter Aufsicht einer Eichbehörde betrieben werden.

Die Prüfstelle 23 kann mit eine Zeitserver 23a verbunden sein und eine Zeitinformation von dem Zeitserver, z.B. auch über das Datennetz 20 beziehen. Der Zeitserver 23a kann unter der Aufsicht einer Eichbehörde sein.

Insbesondere ist es möglich, die Zeitinformationen von der Uhr 10b zu erfassen und zur weiteren Verarbeitung bereitzustellen. Dies kann darin liegen, dass die lokale Zeitinformation über das Datennetz 20 an die Prüfstelle 23 übermittelt wird. Ferner kann die Prüfstelle 23 auch auf die lokale Zeitinformation über das Datennetz 20 zugreifen. Die in dem Speicher gespeicherten Datensätze mit Zeitinformation und Messgerätezählerstand können ebenfalls von der Prüfstelle 23 abgerufen und geladen werden.

Die Uhr 10b kann durch ein externes Zeitsignal (Stellsignal) gestellt werden. Hierzu kann die Uhr 10b drahtlos, z.B. DCF77 oder drahtgebunden über z.B. das Datennetz von einem Zeitgeber ein Zeitsignal empfangen. Mit Hilfe dieses Signals ist es möglich, die Uhr 10b lokal möglichst exakt zu halten. Doch ist es möglich, dieses Zeitsignal zu manipulieren. Eine Manipulation führte dazu, dass die Uhr 10b falsche Zeitinformationen bereitstellt. Auch kann die Uhr 10b selber verstellt werden.

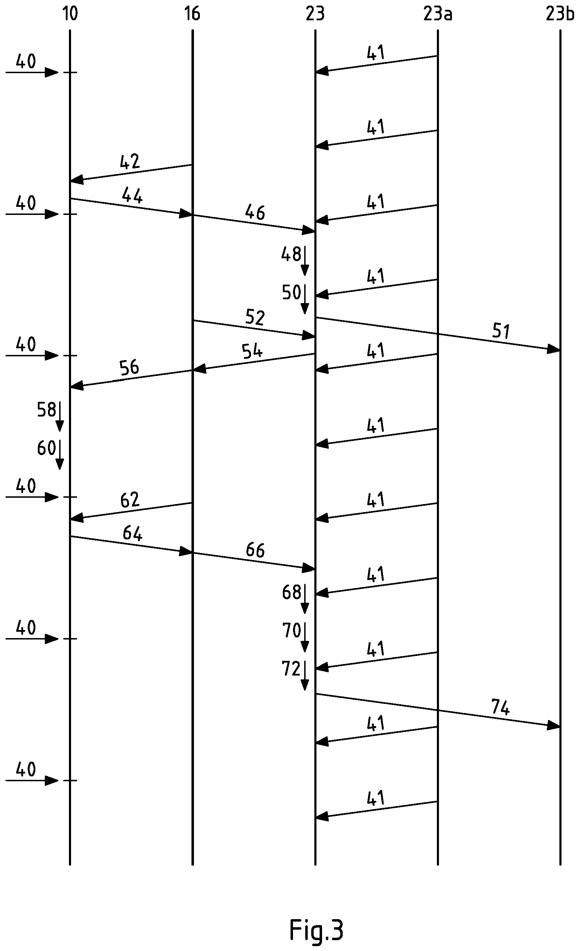

Das Verfahren zum Synchronisieren der Uhr 10b mit der Zeit der Prüfstelle 23 bzw. des Zeitservers 23a und zur Überprüfung, ob die Uhr 10b manipuliert worden ist, ist nachfolgend in Fig. 3 dargestellt.

Lokal in der Ladestation 2 kann eine Manipulation der Zeitinformation dadurch festgestellt werden, dass die aktuellen Zeitinformationen regelmäßig mit gespeicherten Zeitinformationen verglichen werden. Die aktuelle Zeitinformation muss immer jünger als alle gespeicherten Zeitinformationen sein. Ansonsten kann ein Protokolleintrag generiert und abgespeichert werden. Auch können die Protokolleinträge an die Prüfstelle 23 gesendet werden. Schließlich kann ein einem detektierten Fehler eine Statusbit (Messgerätestatus) gesetzt werden.

In dem Fahrzeug 6 ist neben einer mit einem Anschluss 29 verbundenen Batterie 26 eine Kommunikationseinheit 28 vorgesehen. Die Kommunikationseinheit 28 ermöglicht das Senden und Empfangen von Daten auf dem Verbindungskabel 4. Angeschlossen an die Kommunikationseinheit 28 ist eine Signatureinheit 30. Die Signatureinheit 30 kann von dem Fahrzeug 6 eine eindeutige Identifikation 32 erfassen.

Während des Ladevorgangs des Fahrzeugs 6 an der Ladestation 2 wird Energie von dem Energieversorgungsnetz 14 in die Batterie 26 des Fahrzeugs 6 gespeist. Die Menge der eingespeisten Energie wird mittels des Messgeräts 10a erfasst. Die Energiemenge, beispielsweise ein Zählerstand des Messgerätes 10a, als auch andere Daten, wie beispielsweise die Identifikation der Ladestation 2 und/oder die Identifikation des Messgerätes 10a, Zeitinformationen wie z.B. ein Zeitstempel, eine Uhrzeit, ein Datum und/oder ein Zeit-Index der Uhr 10b, ein Status der Ladestation 2 und/oder ein Status des Messgerätes 10a, ein Anfangszählerstand, ein Endzählerstand und/oder dergleichen kann über das Verbindungskabel 4 an das Fahrzeug 6 und/oder die Abrechnungszentrale 22 und/oder die Prüfstelle 23 übermittelt werden.

Hierzu übermittelt die Kommunikationseinheit 16a ein Datenpaket. In dem Datenpaket können die genannten Messgrößen gespeichert werden. In dem Datenpaket kann auch ein öffentlicher Messgeräteschlüssel 18b gespeichert werden. Auch können neben dem Datenpaket der öffentliche Messgeräteschlüssel 18b und/oder Signaturen zwischen Ladestation 2 und Fahrzeug 6 und/oder Abrechnungszentrale 22 und/oder Prüfstelle 23 ausgetauscht werden.

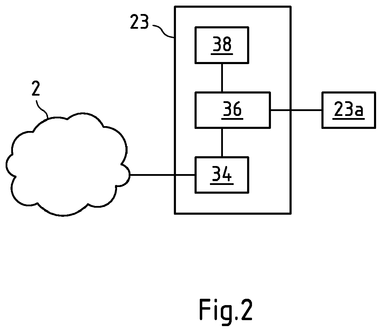

Fig. 2 zeigt einen schematischen Aufbau einer Prüfstelle 23. Zu erkennen ist, dass die Prüfstelle über eine Kommunikationseinrichtung 34 mit dem Datennetz 20 verbunden ist und hierüber insbesondere Zeitinformationen und Messgerätezählerstände von der Ladestation 2 empfangen kann. Der Austausch der Zeitinformationen und der Messgerätezählerstände kann im Push- oder Pull-Verfahren erfolgen.

In der Prüfstelle 23 ist eine Vergleichseinrichtung 36 und in einem Speicher 38 angeordnet. Zusammen mit den Zeitinformationen können auch die empfangenen und den Zeitinformationen zugeordneten Messgerätezählerstände in dem Speicher 38 abgespeichert sein.

Die Prüfstelle kann ein internes oder externes Zeitsignal von einem Zeitgeber 23a empfangen. Der Zeitgeber 23a ist bevorzugt ein geeichter Zeitgeber, dessen Zeitnormale von der Prüfstelle 23 als verlässlich und rechtlich zugelassen anerkannt wird.

Insbesondere bei Ladestationen 2 für Elektrofahrzeuge 6 kommt es dazu, dass Ladezeiten besonders lang, in der Regel mehr als eine Stunde, sind. Durch die Notwendigkeit, zeitvariable Tarife zur Verfügung zu stellen, kann es dazu kommen, dass während eines Ladevorgangs ein Tarifwechsel stattfindet. Solche Tarifwechsel führen zu unterschiedlichen Strompreisen, wodurch es notwendig ist, dass die Zeitbasis, mittels der die bezogene Energiemenge berechnet wird, korrekt ist.

Manipulationen an der Zeitbasis sind zu vermeiden und sollten Manipulationen auftreten, müssen diese möglichst sicher erkannt werden.

Die Synchronisation der Zeitinformation in der Ladestation 2 ist in Fig. 3 schematisch dargestellt.

In der Figur 3 ist der Ablauf einer Kommunikation zwischen dem Zähler 10, der Recheneinheit 16, der Prüfstelle 23 und dem Zeitgeber 23a dargestellt.

Zu erkennen ist, dass in dem Zähler 10 in regelmäßigen Abständen Zeitinformationen der Uhr 10b gespeichert werden (40). Dies kann alle paar Minuten sein, z.B. alle 2 Minuten, alle 6 Minuten, alle 10 Minuten, etc.. Hierbei kann die Zeitinformation mit Hilfe des Messgeräteschlüssels 18 signiert abgespeichert werden. Das Abspeichern (40) kann in einem Speicher in dem Zähler 10 erfolgen.

Auch zu erkennen ist, dass die Prüfstelle 23 in regelmäßigen Abständen Zeitinformationen von dem Zeitgeber 23a empfängt (41). Dies kann im Rahmen einer NTP Zeitsynchronisation zwischen der Prüfstelle 23 und dem Zeitgeber 23a erfolgen.

Zu einem Zeitpunkt, zu dem eine Synchronisation der Zeitinformation zwischen der Uhr 10b und der Prüfstelle 23 erforderlich ist, z.B. regelmäßig einmal am Tag, oder alle 6 Stunden oder dergleichen, wird ausgelöst durch die Recheneinheit 16 eine Anfrage (42) an den Zähler 10 gerichtet, mit der die Recheneinheit 16 zumindest die Werte jüngste gespeicherte signierte Zeitinformation, die im Schritt 40 gespeichert worden ist, die aktuelle Zeitinformation der Uhr 10b, eine Zähleridentifikation und ein Wert eines Fehlerindexes.

Der Fehlerindex kann durch eine Überwachungsschaltung in der Uhr 10b überwacht werden. Diese Überwachungsschaltung überprüft ständig (in Überwachungsintervallen von z.B. 1 Sekunde, 5 Sekunden, 10 Sekunden, etc.), ob die Uhrzeit in der Uhr 10b streng monoton größer wird und ob Uhrzeitsprünge vorkommen. Hierbei kann die Überwachungsschaltung einen Grenzwert überwachen. Die Uhrzeit in der Uhr darf zwischen zwei Überwachungsintervallen nicht mehr als der Grenzwert voneinander abweichen. So kann z.B. überwacht werden, ob sich die Uhrzeit in der Uhr zwischen zwei Überwachungsintervallen um mehr als den Grenzwert verändert oder nicht. Verändert sich die Uhrzeit um mehr als den Grenzwert, kann ein Wert des Fehlerindexes z.B. um 1 inkrementiert werden. Verändert sich die Uhrzeit um weniger als der Grenzwert, kann auf ein Synchronisieren geschlossen werden, welches kein meldepflichtiges Ereignis ist.

Die abgefragten Werte werden von dem Zähler 10 an die Recheneinheit 16 übertragen (44). In der Recheneinheit wird ein Datenpaket gebildet zumindest aus den abgefragten Werten signierter Zeitinformation, aktuelle Zeitinformation, Zähleridentifikation und Wert des Fehlerindexes gebildet.

Dieses Datenpaket wird zusammen mit einem Start Session Signal von der Recheneinheit 16 an die Prüfstelle 23 übermittelt (46).

Die Prüfstelle 23 empfängt das Datenpaket und das Start Session Signal. Zunächst prüft (48) die Prüfstelle, ob die Zähleridentifikation einer in einer Liste gespeicherten Zähleridentifikation entspricht. Falls nein, so kann die Prüfstelle 23 die Anfrage 46 zurückweisen, unbeantwortet lassen oder die zugehörige Zähleridentifikation in der Liste nachtragen.

Anschließend überprüft (50) die Prüfstelle 23 die Gültigkeit der Anfrage anhand der Signatur der signierten Zeitinformation und der Zähleridentifikation.

Abschließend fügt die Prüfstelle 23 ihre aktuelle Zeitinformation dem Datenpaket hinzu und signiert das so ergänzte Datenpaket. Dieses signierte Datenpaket wird in einem Speicher 23b der Prüfstelle 23 abgespeichert (51).

Außerdem wird ein Datenkanal für eine NTP Synchronisation mit der anfragenden Ladestation 2 geöffnet.

Die Recheneinheit 16 startet einen Zeitsynchronisationsversuch 52. Dieser kann unter Verwendung des Autokey Protokolls des NTP Protokolls erfolgen. Hierbei sendet die Recheneinheit 16 die Zähleridentifikation an die Prüfstelle 23. Anhand der Zähleridentifikation kann die Prüfstelle 23 überprüfen, ob der Zeitsynchronisationsversuch 52 von der zuvor anfragenden Ladestation 2 stammt, da zuvor ja bereits die Zähleridentifikation übermittelt wurde und der Kommunikationskanal der Zähleridentifikation zugewiesen sein kann.

Die Prüfstelle übermittelt (54) dann unter Berücksichtigung von Signallaufzeiten eine neue Zeitinformation an die Recheneinheit 16. Hierbei kommt das NTP Protokoll zum Einsatz, welches kurze Signallaufzeiten und Berücksichtigung der Laufzeitlatenz sicherstellt.

Die Recheneinheit übermittelt (56) die empfangene neue Zeitinformation an die Uhr 10b des Zählers 10.

Die Zeitinformation in der Uhr 10b wird auf den Wert der neuen Zeitinformation gestellt (58).

Die Überwachungsschaltung überprüft (60) den Wert der Veränderung der Zeitinformation. Ist diese geringer als der Grenzwert, bleibt der Fehlerindex unverändert. Ansonsten wird der Fehlerindex verändert. Das heißt, dass wenn entweder zum Zeitpunkt der Synchronisation (58) oder zu einem früheren Zeitpunkt die Uhrzeit nachgestellt oder manipuliert worden ist, verändert sich der Fehlerindex.

Anschließend fragt die Recheneinheit entsprechend Schritt 42 erneut Daten von dem Zähler ab (62). Diese Daten enthalten die jüngste signierte abgespeicherte Zeitinformation, die aktuelle Zeitinformation, den Fehlerindex und die Zähleridentifikation. Diese Daten werden von dem Zähler 10 an die Recheneinheit 16 übermittelt 64.

Die Recheneinheit sendet (66) ein End Session Signal zusammen mit den zuvor empfangenen Daten an die Prüfstelle 23.

In der Prüfstelle wird geprüft (68) ob für die enthaltene Zähleridentifikation ein Kommunikationskanal geöffnet ist. Falls ja, wird der Kommunikationskanal geschlossen (70). Ansonsten wird die Nachricht verworfen.

Dann fügt die Prüfstelle 23 den empfangenen Daten ihre aktuelle Zeitinformation hinzu und signiert (72) das ergänzte Datenpaket.

Das ergänzte Datenpaket wird anschließend im Speicher 23b abgespeichert (74).

Danach wird in der Liste vermerkt, dass für die zugehörige Zähleridentifikation eine Zeitsynchronisation durchgeführt wurde. Somit kann in der Liste geprüft werden, für welche Zähler in welchem Zeitraum Zeitsynchronisationen durchgeführt wurden. Falls ein Zähler in einem bestimmten Zeitraum keine Identifikation durchgeführt hat, wird ein Logbucheintrag generiert.

Außerdem können die beiden in den Schritten 51 und 74 gespeicherten Fehlerindizes miteinander verglichen werden. Hat sich der Zählerindex verändert, so kann auf ein Nachstellen der Uhrzeit der Uhr 10b geschlossen werden, und ebenfalls ein Logbucheintrag generiert werden.

Hierbei kann dann geprüft werden, zu welchem Zeitpunkt der Fehler festgestellt wurde.

Mit Hilfe des gezeigten Verfahrens ist es möglich, festzustellen, ob einen Uhrzeit in einem Zähler manipuliert wurde. Außerdem wird durch regelmäßige Synchronisation der Uhr 10b sichergestellt, dass die Uhr 10b in der Regel synchron mit der Zeitbasis in der Prüfstelle ist.

## Patentansprüche

1. Verfahren zum Einstellen einer Zeitinformation in einer Ladestation (2) für Elektrofahrzeuge (6), umfassend:
a) Erfassen der in der Ladestation (2) bereitgestellten aktuellen Zeitinformation und eines Wertes eines Fehlerindexes, der bei einer Veränderung der Zeit oberhalb einer Toleranzschwelle verändert werden kann,
b) Übermitteln der aktuellen Zeitinformation zusammen mit dem Wert des Fehlerindexes von der Ladestation (2) an eine von der Ladestation (2) räumlich getrennte, zentrale Prüfstelle (23),
c) Abfragen einer neuen Zeitinformation durch die Ladestation (2) bei der zentralen Prüfstelle (23),
d) Vergleichen der abgefragten neuen Zeitinformation mit der in der Ladestation (2) bereitgestellten aktuellen Zeitinformation in der Ladestation (2),
e) Verändern eines Fehlerindexes bei einer festgestellten Abweichung der abgefragten neuen Zeitinformation von der in der Ladestation bereitgestellten aktuellen Zeitinformation die größer als ein Grenzwert ist in der Ladestation (2),
f) Einstellen der aktuellen Zeitinformation in der Ladestation (2) auf die neue Zeitinformation,
g) Übermitteln der nach Schritt f) eingestellten aktuellen Zeitinformation zusammen mit dem Wert des Fehlerindexes an die zentrale Prüfstelle (23),
h) Vergleichen der in den Schritten b) und g) übermittelten Werte der Fehlerindexe in der zentralen Prüfstelle (23).

2. Verfahren nach Anspruch 1, **dadurch gekennzeichnet, dass** die Ladestation (2) die aktuelle Zeitinformation, insbesondere vor den Schritten b) und/oder f) und/oder in regelmäßigen, vorzugsweise gleichmäßigen Abständen, signiert abspeichert.

3. Verfahren nach Anspruch 1 oder 2, **dadurch gekennzeichnet, dass** in Schritt a) zusätzlich eine Ladestationskennung erfasst wird und dass in Schritt b) zusätzlich die Ladestationskennung und/oder die jüngste signiert gespeicherte Zeitinformation übermittelt wird und/oder dass in Schritt f) zusätzlich die Ladestationskennung und/oder die jüngste signiert gespeicherte Zeitinformation übermittelt wird.

4. Verfahren nach einem der Ansprüche 1 bis 3, **dadurch gekennzeichnet, dass** die in Schritt b) und/oder in Schritt f) übermittelten Informationen in der zentralen Prüfstelle (23) jeweils signiert und/oder mit Zeitinformationen der zentralen Prüfstelle (23) abgespeichert werden.

5. Verfahren nach einem der Ansprüche 3 bis 4, **dadurch gekennzeichnet, dass** nach dem Empfang der in Schritt b) übermittelten Ladestationskennung die zentrale Prüfstelle (23) einen Kommunikationskanal für ein Abfragen nach Schritt c) durch die mittels der Ladestationskennung identifizierten Ladestation (2) aufrecht erhält.

6. Verfahren nach einem der Ansprüche 1 bis 5, **dadurch gekennzeichnet, dass** in Schritt e) ein Grenzwert von größer 10 Sekunden, vorzugsweise größer 20 Sekunden, besonders bevorzugt von größer 23 bzw. 27 Sekunden vorgegeben ist.

7. Verfahren nach einem der Ansprüche 5 bis 6, **dadurch gekennzeichnet, dass** nach dem Empfang der in Schritt f) übermittelten Ladestationskennung die zentrale Prüfstelle (23) den Kommunikationskanal schließt.

8. Verfahren nach einem der Ansprüche 1 bis 7, **dadurch gekennzeichnet, dass** bei einer Abweichung der Werte der Fehlerindexe in Schritt h) ein Alarmsignal generiert wird und/oder dass bei einem Ausbleiben einer Information nach Schritt g) in der zentralen Prüfstelle (23) ein Alarmsignal generiert wird.

9. Verfahren nach einem der Ansprüche 1 bis 8, **dadurch gekennzeichnet, dass** in der zentralen Prüfstelle (23) eine Liste mit Ladestationskennungen gespeichert ist und dass mit Hilfe der gespeicherten Ladestationskennungen nach Schritt b) übermittelte Informationen auf ihre Zulässigkeit geprüft werden.

10. Verfahren nach einem der Ansprüche 1 bis 9, **dadurch gekennzeichnet, dass** in der Prüfstelle eine Liste mit Ladestationskennungen gespeichert ist und dass in regelmäßigen Abständen überprüft wird, ob die zugehörigen Ladestationen (2) Informationen nach den Schritten b) und g) übermittelt haben.

11. Ladestation (2) für Elektrofahrzeuge, umfassend Mittel zur Ausführung der Schritte des Verfahrens nach Ansprüchen 1-10, weiterhin umfassend:
- einen Zähler (10b) eingerichtet zum Bereitstellen einer lokalen Zeitinformation,
- Erfassungsmittel eingerichtet zum Erfassen der in der Ladestation (2) bereitgestellten Zeitinformation,
- Kommunikationsmittel (16) eingerichtet zum Senden von aktuellen Zeitinformationen und zum Empfangen von neuen Zeitinformationen,
- Vergleichsmittel (36) eingerichtet zum Vergleichen der aktuellen Zeitinformationen mit den neuen Zeitinformationen und zum Verändern eines Fehlerindexes, der bei einer Veränderung der Zeit oberhalb einer Toleranzschwelle verändert werden kann, wobei
- die Kommunikationsmittel (16) zum Senden des Fehlerindexes eingerichtet sind.

12. Prüfeinrichtung, umfassend Mittel zur Ausführung der Schritte des Verfahrens nach Ansprüchen 1-10, weiterhin umfassend:
- Übertragungsmittel (34) eingerichtet zum Empfangen eines Wertes eines Fehlerindexes von einer Ladestation (2), der bei einer Veränderung der Zeit oberhalb einer Toleranzschwelle verändert werden kann,
- Vergleichsmittel (36) eingerichtet zum Vergleichen des empfangenen Fehlerindexes mit einem in der zentralen Prüfstelle (23) gespeicherten Fehlerindex, und
- Speichermittel (38) eingerichtet zum Abspeichern eines Fehlereintrags.

13. System mit zumindest einer Ladestation (2) nach Anspruch 11 und einer zentralen (23) nach Anspruch 12.

## Claims

1. Method for setting time information in a charging station (2) for electrical vehicles (6), comprising:
a) acquisition of the current time information provided in the charging station (2) and a value of an error index, which may be modified in the event of a change in the time above a tolerance threshold,
b) transmission of the current time information together with the value of the error index from the charging station (2) to a central testing location (23) spatially separate from the charging station (2),
c) requesting of new time information by the charging station (2) from the central testing location (23),
d) comparison of the requested new time information in the charging station (2) with the current time information provided in the charging station (2),
e) modification of an error index if a difference is found, between the requested new time information and the current time information provided in the charging station, which is greater than a threshold value in the charging station (2),
f) setting of the current time information in the charging station (2) to the new time information,
g) transmission of the current time information set according to step f) together with the value of the error index to the central testing location (23),
h) comparison of the values of the error indices which were transmitted in steps b) and g) in the central testing location (23).

2. Method according to Claim 1, **characterised in that** the charging station (2) stores the current time information, in particular before steps b) and/or f) and/or at regular, preferably uniform intervals, with a signature.

3. Method according to Claim 1 or 2, **characterised in that** a charging station identifier is additionally acquired in step a), and **in that** the charging station identifier and/or the most recent time information stored with a signature is additionally transmitted in step b), and/or **in that** the charging station identifier and/or the most recent time information stored with a signature is additionally transmitted in step f).

4. Method according to any one of Claims 1 to 3, **characterised in that** the information items transmitted in step b) and/or in step f) are stored in the central testing location (23) respectively with a signature and/or with time information items of the central testing location (23).

5. Method according to any one of Claims 3 and 4, **characterised in that,** after reception of the charging station identifier transmitted in step b), the central testing location keeps a communication channel open for a request according to step c) by the charging station (2) identified by means of the charging station identifier.

6. Method according to any one of Claims 1 to 5, **characterised in that** a threshold value of more than 10 seconds, preferably more than 20 seconds, particularly preferably more than 23 or 27 seconds, is specified in step e).

7. Method according to any one of Claims 5 and 6, **characterised in that** the central testing location (23) closes the communication channel after reception of the charging station identifier transmitted in step f).

8. Method according to any one of Claims 1 to 7, **characterised in that** an alarm signal is generated if there is a difference between the values of the error indices in step h), and/or an alarm signal is generated if information is missing in the central testing location (23) according to step g).

9. Method according to any one of Claims 1 to 8, **characterised in that** a list of charging station identifiers is stored in the central testing location (23), and **in that** information items transmitted according to step b) are tested for their permissibility with the aid of stored charging station identifiers.

10. Method according to any one of Claims 1 to 9, **characterised in that** a list of charging station identifiers is stored in the testing location, and **in that** a check is made at regular intervals as to whether the associated charging stations (2) have transmitted information items according to steps b) and g).

11. Charging station (2) for electrical vehicles, comprising means for carrying out the steps of the method according to Claims 1-10, furthermore comprising:
- a counter (10b) configured to provide local time information,
- acquisition means configured to acquire the time information provided in the charging station (2),
- communication means (16) configured to send current time information items and to receive new time information items,
- comparison means (36) configured to compare the current time information items with new time information items and to modify an error index, which may be modified in the event of a change in the time above a tolerance threshold,
- wherein the communication means (16) are configured to send the error index.

12. Testing device comprising means for carrying out the steps of the method according to Claims 1-10, furthermore comprising:
- transmission means (34) configured to receive from a charging station (2) a value of an error index, which may be modified in the event of a change in the time above a tolerance threshold,
- comparison means (36) configured to compare the received error index with an error index stored in the central testing location (23), and
- storage means (38) configured to store an error entry.

13. System having at least one charging station (2) according to Claim 11 and a central (23) according to Claim 12.

## Revendications

1. Procédé de réglage d'une information de temps dans une borne de recharge (2) pour des véhicules électriques (6), ledit procédé consistant :
a) à déterminer l'information de temps en cours fournie dans la borne de recharge (2), et à déterminer une valeur d'un indice d'erreur, ladite valeur d'indice d'erreur pouvant être modifiée dans le cas d'une modification du temps supérieure à un seuil de tolérance,
b) à transmettre à un point de contrôle central (23) séparé physiquement de la borne de recharge (2), l'information de temps en cours, ainsi que la valeur de l'indice d'erreur de la borne de recharge (2),
c) à interroger une nouvelle information de temps en passant par la borne de recharge (2) située près du point de contrôle central (23),
d) à comparer la nouvelle information de temps interrogée, avec l'information de temps en cours relevée dans la borne de recharge (2) et fournie par ladite borne de recharge (2),
e) à modifier un indice d'erreur dans le cas d'un écart constaté concernant la nouvelle information de temps interrogée, par rapport à l'information de temps en cours fournie dans la borne de recharge, écart qui, dans la borne de recharge (2), est supérieur à une valeur limite,
f) à régler l'information de temps en cours relevée dans la borne de recharge (2), sur la nouvelle information de temps,
g) à transmettre au point de contrôle central (23), l'information de temps en cours réglée selon l'étape f), ainsi que la valeur de l'indice d'erreur,
h) à comparer, dans le point de contrôle central (23), les valeurs des indices d'erreurs transmises au cours des étapes b) et g).

2. Procédé selon la revendication 1, **caractérisé en ce que** la borne de recharge (2) stocke en mémoire, de façon authentifiée, l'information de temps en cours, en particulier avant les étapes b) et/ou f) et/ou à des intervalles réguliers, de préférence uniformes.

3. Procédé selon la revendication 1 ou 2, **caractérisé en ce qu'**une identification de la borne de recharge est détectée, de manière supplémentaire, au cours de l'étape a), et **en ce que** l'identification de la borne de recharge et/ou l'information de temps la plus récente stockée en mémoire, de façon authentifiée, est transmise de manière supplémentaire au cours de l'étape b) et/ou **en ce que** l'identification de la borne de recharge et/ou l'information de temps la plus récente, stockée en mémoire de façon authentifiée, est transmise de manière supplémentaire au cours de l'étape f).

4. Procédé selon l'une quelconque des revendications 1 à 3, **caractérisé en ce que** les informations transmises au cours de l'étape b) et/ou au cours de l'étape f) sont à chaque fois authentifiées dans le point de contrôle central (23) et/ou stockées en mémoire avec des informations de temps du point de contrôle central (23).

5. Procédé selon l'une des revendications 3 à 4, **caractérisé en ce que**, après la réception de l'identification de la borne de recharge, transmise au cours de l'étape b), le point de contrôle central (23) maintient un canal de communication pour une interrogation selon l'étape c), en passant par la borne de recharge (2) identifiée au moyen de l'identification de la borne de recharge.

6. Procédé selon l'une quelconque des revendications 1 à 5, **caractérisé en ce que**, au cours de l'étape e), une valeur limite supérieure à 10 secondes, de préférence supérieure à 20 secondes, en particulier de préférence supérieure à 23 ou 27 secondes, est prédéfinie.

7. Procédé selon l'une des revendications 5 à 6, **caractérisé en ce que**, après la réception de l'identification de la borne de recharge transmise au cours de l'étape f), le point de contrôle central (23) ferme le canal de communication.

8. Procédé selon l'une quelconque des revendications 1 à 7, **caractérisé en ce que**, dans le cas d'un écart des valeurs des indices d'erreurs au cours de l'étape h), un signal d'alarme est généré et/ou **en ce que**, en cas d'absence d'une information selon l'étape g), un signal d'alarme est généré dans le point de contrôle central (23).

9. Procédé selon l'une quelconque des revendications 1 à 8, **caractérisé en ce qu'**une liste comprenant des identifications de bornes de recharge est stockée en mémoire dans le point de contrôle central (23), et **en ce que** des informations transmises selon l'étape b), à l'aide des identifications de bornes de recharge stockées en mémoire, sont contrôlées concernant leur fiabilité.

10. Procédé selon l'une quelconque des revendications 1 à 9, **caractérisé en ce qu'**une liste comprenant des identifications de bornes de recharge est stockée en mémoire dans le point de contrôle, et **en ce que**, à intervalles réguliers, le système contrôle si les bornes de recharge associées (2) ont transmis des informations selon les étapes b) et g).

11. Borne de recharge (2) pour des véhicules électriques, ladite borne de recharge comprenant des moyens permettant la réalisation des étapes du procédé selon l'une quelconque des revendications 1 à 10, ladite borne de recharge comprenant en outre :
- un compteur (10b) installé pour fournir une information de temps locale,
- des moyens de détermination installés pour déterminer l'information de temps fournie dans la borne de recharge (2),
- des moyens de communication (16) installés pour envoyer des informations de temps en cours, et pour recevoir de nouvelles informations de temps,
- des moyens de comparaison (36) installés pour comparer les informations de temps en cours, aux nouvelles informations de temps, et pour modifier un indice d'erreur qui peut être modifié dans le cas d'une modification du temps supérieure à un seuil de tolérance,
- où les moyens de communication (16) sont installés pour l'envoi de l'indice d'erreur.

12. Dispositif de contrôle comprenant des moyens permettant la réalisation des étapes du procédé selon l'une quelconque des revendications 1 à 10, ledit dispositif de contrôle comprenant en outre :
- des moyens de transmission (34) installés pour la réception d'une valeur d'un indice d'erreur provenant d'une borne de recharge (2), ladite valeur d'indice d'erreur pouvant être modifié dans le cas d'une modification du temps supérieure à un seuil de tolérance,
- des moyens de comparaison (36) installés pour la comparaison de l'indice d'erreur reçu, avec un indice d'erreur stocké en mémoire dans le point de contrôle central (23), et
- des moyens de mémorisation (38) installés pour le stockage en mémoire d'un enregistrement d'erreur.

13. Système comprenant au moins une borne de recharge (2) selon la revendication 11 et comprenant un point de contrôle central (23) selon la revendication 12.
